# EUROPEAN PATENT APPLICATION

(11) **EP 2 420 168 A1**
(43) Date of publication of application: **22.02.2012**
(21) Application number: 11176756.2
(22) Date of filing: 05.08.2011
(51) Int. Cl.: A47J 37/12

(54) **Fryer fitted with means for filtering and purifying oil and a method carried out through said means**

(30) Priority: 06.08.2010 IT VR20100167
(71) Applicant: Inoxpiu S.r.l., 38040 Trento (IT)
(72) Inventor: Zuccatti, Andrea, 38040 Trento (IT)
(74) Representative: Sandri, Sandro

(57) **Abstract**

A fryer fitted with means for filtering and purifying frying oil, in which the means substantially comprise two components (10, 11) which can be installed on a new fryer (12) or retrofitted to an existing fryer, and in which the first of the two filtering components comprises a basket holder prefilter (10) inserted inside the main cooking tank of the frying machine designed to receive the frying basket (13), while the second component comprises a filtering element (11) comprising a series of micromesh elements which enable gravity-fed filtering of the oil, and where all the filtering elements are contained inside a holding tank (14) closed by a cover (17), the fryer being installable close to a discharge pipe (S) and connected to this in order to enable draining of the cleaning mix and the products for washing the tank and/or the filters.

## Description

### TECHNICAL FIELD

This invention concerns a fryer fitted with means for filtering and purifying the oil used for frying and a method implemented with such means.

More specifically, this invention refers to a fryer fitted with a compact system for filtering and purifying frying oil, a system that makes it possible to limit the value of the harmful "polar compounds" within the maximum acceptable threshold defined by law and set at 25 percentage points.

The system is designed as an alternative to professional fryers already on the market, and is therefore a built-in or add-on component to the entire product line, but can also be retrofitted on existing or new machines, including a wide range of models.

The device according to the invention is designed as an "on board" filtering system that can perform its function without any additional and cumbersome external devices.

The newly designed filtering and purifying system according to the invention therefore comprises extremely compact components that are easy to remove and perfectly cleanable with a simple cycle in a dishwasher.

This invention can be applied in the oil filtering field, in particular in the sector relative to the purifying of food frying oil.

### BACKGROUND ART

It is known that, thanks to the thermostat with which fryers are normally fitted, they can keep the working temperature and oil smoke temperature under control. This temperature should remain constant at around 180°C to prevent the deterioration, if it is too hot, or the excessive absorption by the food of oil if it is not hot enough.

With a good professional fryer there is therefore no risk of the food being soaked with oil or butter or, on the contrary, of being too dry or even burnt.

The thermostat of the fryer must therefore be set so that the temperature of the oil never exceeds 180°C in order to prevent the formation of harmful substances in the food, such as acrylamide. In other words, the oil should never reach the "smoke point", the moment at which, due to the effect of the heat produced by the burner, pyrolysis takes place, that is to say the breaking apart of the fat molecules, with unfortunate consequences: smoke and sour tastes are produced, and this is also very harmful to the human body, particularly for the liver.

It is also known that the oil should be changed frequently, so that the fried food is more healthy and tasty.

In fact, especially after the oil has been used for some time, it deteriorates, and, all other parameters being equal, seed oils which have a high content of polyunsaturated fatty acids oxidise much faster than other oils and produce toxic substances.

Every type of oil has its own specific level of tolerance of high temperatures, defined in fact as the smoke point. Extra-virgin olive oil, for example, which is the oil least used in fryers, has one of the highest smoke points among all oils (around 210°C), withstanding temperatures around 180°C.

An aspect even more determining than the heat level is the cooking time: while the first alterations occur after 20 minutes of exposure to temperatures that are not too high, after prolonged periods of heating real toxic effects are produced, with the formation of degradation products such as cyclic monomers and peroxides.

It would therefore be advisable to use continuous cycle filtering systems for frying oil, but this practice is not currently widespread, and the known filtering systems offer very limited results.

Continuous cycle filtering of frying oil, currently neither widely known or used, would offer numerous advantages including an economic saving since by programmed hot filtering it is possible to prolong the life of the oil to a significant extent, thereby saving on the purchase of new oil, and definitively eliminating all the microparticles that alter the chemical stability of the oil and consequently the taste and quality of the fried food.

### DESCRIPTION OF THE INVENTION

This invention proposes to provide new means for filtering and purifying the oil used for frying, which are able to eliminate or at least reduce the drawbacks described above.

The invention also proposes to provide means for filtering and purifying the oil used for frying which are relatively simple to produce so as not to have an excessive effect on production costs.

This is achieved by means for filtering and purifying the oil used for frying whose features are described in the main claim.

The dependent claims of the solution in question describe advantageous embodiments of the invention.

The main advantages of this solution, in addition to those deriving from the construction simplicity in relation to the result achieved, concern first of all the fact that the fryer according to the invention uses a compact system for filtering and purifying frying oil that makes it possible to limit the value of the harmful "polar compounds" within the maximum acceptable threshold defined by law and set at 25 percentage points.

The filtering means according to the invention, designed as an alternative to professional fryers already on the market, are therefore a built-in or add-on component and can be fitted on a fryer basically consisting of a fixed base which can be easily fitted inside the cooking cabinet, containing the electrical and hydraulic components, and of a control panel, also located inside the cabinet and which contains the electronic components used for the operating logic.

The filtering system according to the invention comprises two filtering components: a new design basket holder which also acts as a prefilter and one or more quick-release filtering tanks which filter the oil and acts as cleaning tanks.

### DESCRIPTION OF THE DRAWINGS

Other features and advantages of the invention will become clear on reading the description given below of one embodiment of the invention, provided as a non-binding example, with the help of the accompanying drawings, in which:

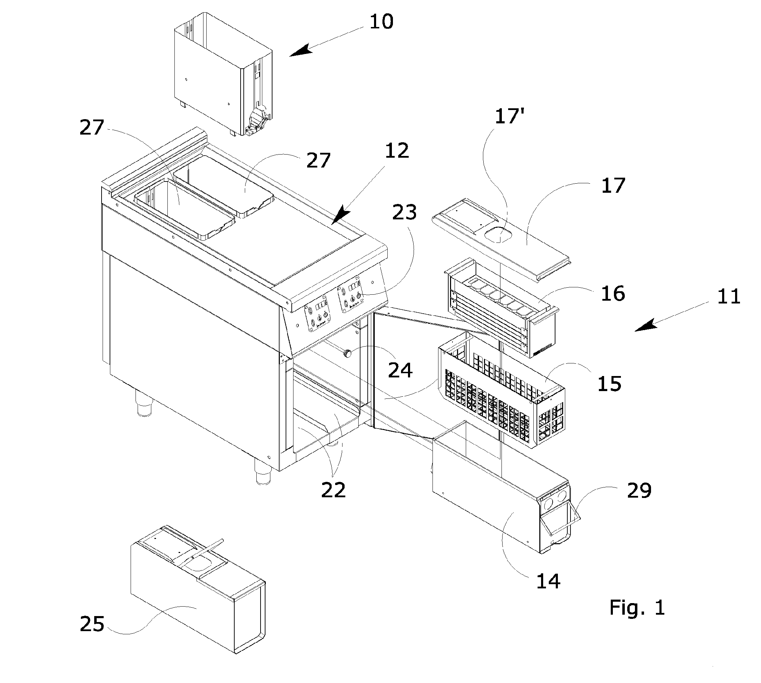

- figure 1 represents the schematic and prospective partially exploded view of the components of the filtering system according to the invention;
- figure 2 shows the schematic and prospective view of the components of the filtering system according to the invention with a filtering tank with the internal filters fitted;
- figure 3 shows a possible example of the display which controls the functions of the machine and the filters;
- figure 4 is a schematic view of the fryer in the version which foresees the installation of a discharge pipe;
- figures 5 and 6 are schematic and prospective views of an additional basket holder tank;
- figures 7, 7a, and 7b are schematic views of the additional basket-holder tank during the first step of its insertion in the frying tank;
- figures 8, 8a, and 8b are schematic views of the additional basket holder tank during the second step of its insertion in the frying tank;
- figures 9, 9a, and 9b are schematic views of the additional basket holder tank during the third and last step of its insertion in the frying tank, in the working position;
- figures 10 to 18 show schematic views of the frying basket according to the invention;
- figures 19 to 22 show the components for the oil filtering cycle.

### DESCRIPTION OF ONE EMBODIMENT OF THE INVENTION

With reference to the accompanying drawings, the system according to the invention for the filtering and purifying of the oil used for frying comprises two components: a basket holder prefilter 10 and a complete filter 11 which can be installed on a new fryer 12 or retrofitted to an existing fryer.

The system according to the invention is designed as an "on board" filtering system that can perform its function without any additional and cumbersome external devices.

The filter is therefore extremely compact, easy to remove and perfectly cleanable with a simple cycle in a dishwasher.

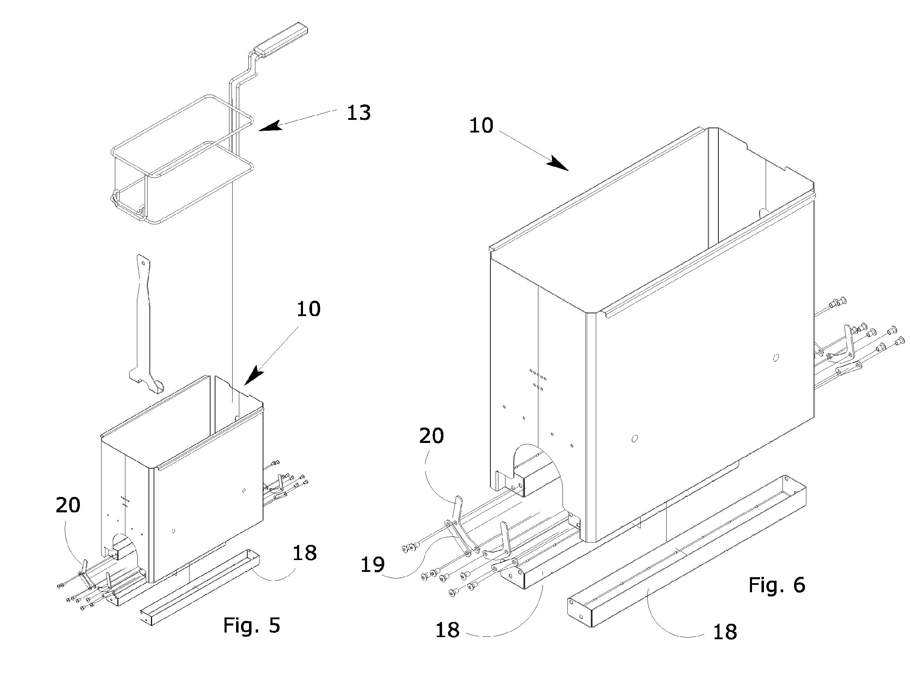

The first of the two filtering components indicated with the reference number 10 consists of a basket holder prefilter which can be inserted inside the main cooking tank of the frying machine and is designed to receive the frying basket 13, as can be seen in figure 5, while the second component 11 of the system according to the invention comprises a complete filtering element consisting of the following components: a holding tank 14, a tank-shaped filter 15 which contains a cascade filter 16, and a cover 17 which hermetically closes the holding tank 14.

More specifically, the first component consisting of the basket holder prefilter 10 enables the residues of the product cooked in the basket to adhere to and to be collected in an empty space which is easy to clean and wash, so that the frying tank remains clean.

The basket holder prefilter 10 substantially consists of a container open at the bottom so that it can be housed inside the frying tank straddling the central electrical resistance.

The lower open base of the basket holder prefilter 10 has tray-shaped panels 18 which are mobile, being jointed on an arm linkage mechanism 19, so that they can rest on the bottom of the fryer straddling across the electrical resistance which thereby remains completely enclosed.

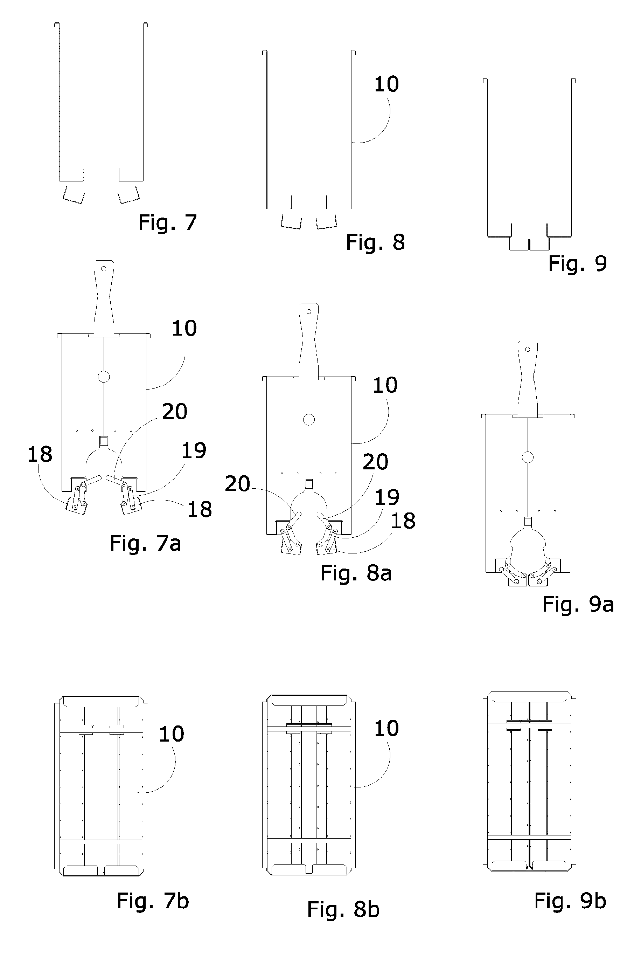

As can be seen in figures 7 to 9, the linkage arms 19 of the basket holder prefilter 10 act as a mechanism which comprises at least one lever 20 which interacts mechanically with the central electrical resistance to join together or to move apart the tray-shaped panels 18 during positioning or removal of the basket holder prefilter 10.

The mobile tray-shaped panels 18 can join together in the lower part, enclosing the resistance and blocking the passage of any impurities which fall on them by gravity. The tray-shaped panels 18 can therefore collect the impurities which fall down during the frying process, and, since the entire system is removable, the cleaning of the components and the disposal of these residues is very easy.

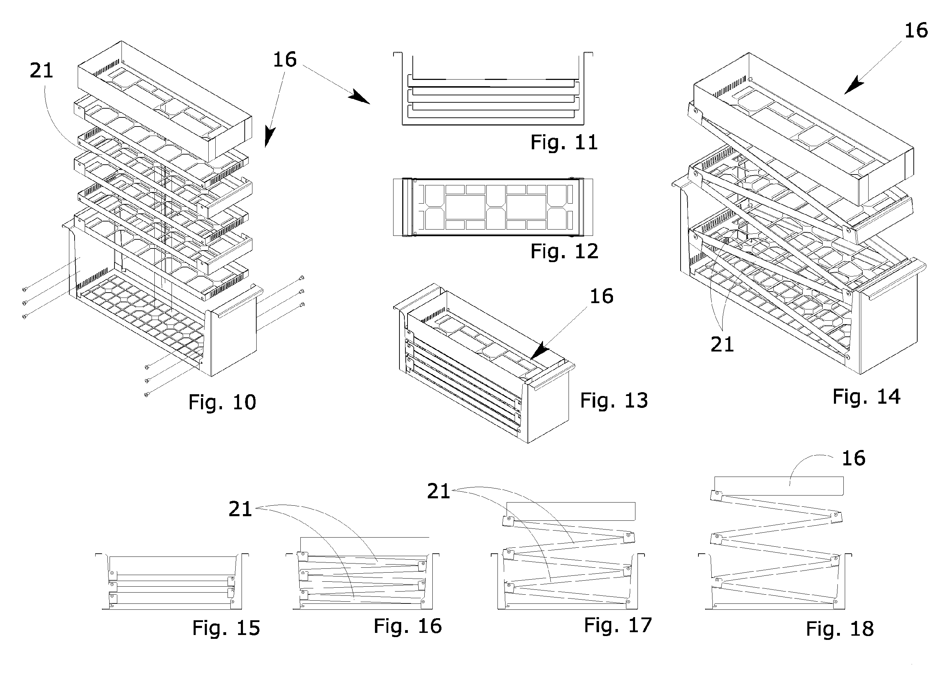

The second filtering component consists of the lower filtering element 11 proper which is the cascade type with various layers of micromesh, and which, as can be seen in figure 10 to 18, comprises the holding tank 14 designed to receive the tank-shaped filter 15 which in turn contains the cascade filter 16, consisting of a series of filter elements 21 hinged to each other and made from micromesh.

Each of the filter elements 21 is hinged to the next one to form a sort of accordion folder which remains folded inside its support in the tank-shaped filter 15 in the working position, and which can when necessary be extracted and fully opened for cleaning.

The holding tank 14 is closed by a cover 17 which has an opening 17' in which the pipe 31 fitted with the discharge valve connected to the frying tank is inserted, as will be described below.

The holding tank 14, complete with all the filters, is inserted inside the fryer 12 and anchored to the fixed base 22 of the fryer cabinet 12, which in turn contains all the electrical, mechanical and hydraulic components including the control panel 23, on the front of the cabinet, while the inside of the cabinet houses the electronic components for controlling the operating logic.

The fryer unit can also have single or multiple compartments and in the case of multiple compartments can house two or more auxiliary tanks 11, as shown in the figures.

The filtering tanks and the auxiliary tanks are the quick-release type and are located on guides provided for this purpose in the base 22, so that they can be removed with the locking and release rod 24.

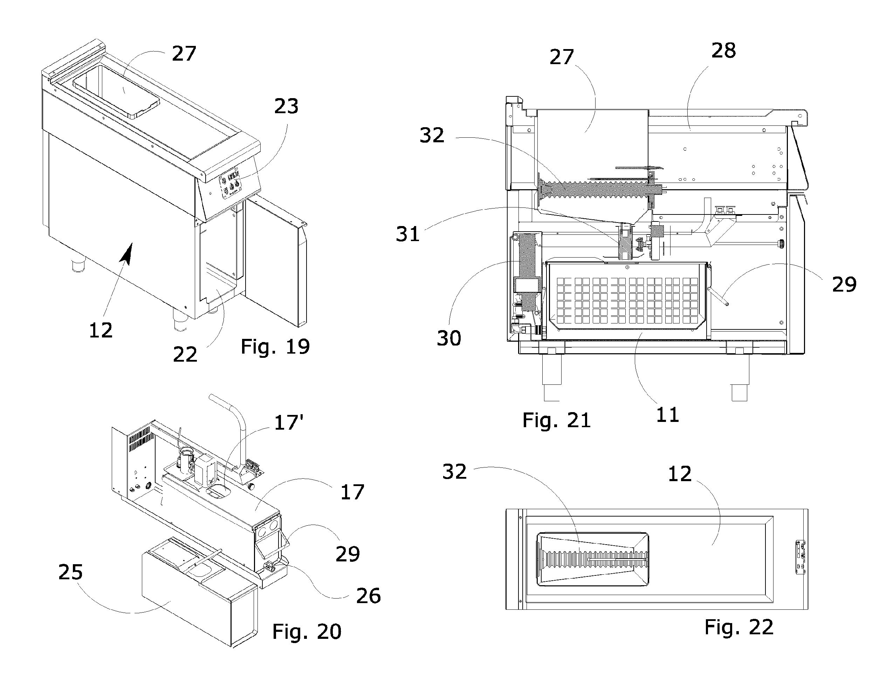

As can be seen in figure 20, the system can also comprise an auxiliary or washing tank 25, used for the purposes which will be described below, while the holding tank 14 is fitted with a drain tap 26.

The automatic functioning of the filtering system according to the invention will now be briefly described, referring to figure 21, in which the reference number 27 indicates the frying tank, number 28 the cleaned oil filler pipe, number 29 the filtering tank extraction handle, number 30 the oil recirculation pump, number 31 the pipe with a valve for discharging the oil in the filter tank and number 32 the electrical resistance for heating the frying oil.

According to the invention, once frying and/or preset intervals are complete, the oil present in the tank 27 is systematically filtered. The valve 31 (indicated in figure 21) allows the oil to enter through the opening 17' in the cover 17, into the filtering tank 11 below to start the filtering process, which starts by passing through a stainless steel mesh prefilter.

The oil is gravity fed through the opening 17' in the cover 17 and enters the cascade filter 16 contained in the tank-shaped filter 15 which by means of a microfiltering system, forced by the recirculation pump 30 which suctions upwards, traps all the impurities that if left in the frying tank would lead to the oil being used up.

The impurities are therefore not filtered in the upper part of the tank, where the high temperatures would cause them to deteriorate further, but are instead caused to deposit on the bottom of the tank, where the oil is cooler, and subsequently passed through the filter and completely eliminated.

At the end of cooking, when the machine is switched off by pressing the button on the control panel 23, the filtering system starts the filtering cycle automatically, shown by a message on the display.

The intelligent management system checks that the filter tank is present, that the oil temperature is between 40 and 130°C and if any oil has been deposited by mistake in the filter tank.

If these conditions are satisfied, the filtration cycle will start; if the conditions are not present, the system will send the respective error signals accompanied by an acoustic warning or will wait for the temperature to drop below the maximum permitted value of 130°C.

When the oil reaches the correct temperature it drops down into the lower filter container 11, in a controlled manner at a controlled speed. The solid cooking residues can be removed by removing the filter and washing it in a dishwasher.

Once it reaches the lower filter, the oil passes through the various cascade filtration steps in the container 11, until it reaches the last step, where the filter tank 15 traps even the smallest particles. The oil is collected in the holding tank 14 which also decants any water present in the oil.

This cycle, which lasts several minutes, deposits the water in the lower part of the tanks 14 where there is a drain tap 26, for drawing off any water at regular intervals.

At the end of the steps described above, the oil which has now been purified of any harmful substances is returned to the frying tank 27 and the system switches to "stand-by", the display switches off and the fryer is now ready for a new cooking cycle.

There is also a manually operated "ch-oil" oil change/oil storage cycle. This procedure is used to discharge spent oil or to store the oil in the long-term storage tank 25 (holidays or breaks in the working activity).

From the operational point of view, before activating the change/oil storage cycle it is necessary to extract the holding tank 14, which can be cleaned and all its components stored for subsequent re-use, since it normally remains empty during the food frying stages.

At this point, having inserted the long-term storage tank in the appropriate housing, the rod 24 should be pulled out and then released to ensure that the tank is properly engaged. The cycle can be started by pressing the "oil" button and holding it down for at least 5 seconds.

The system will check the presence of the filter tank, the temperature of the oil, which must be below 60°C and if any oil has been deposited by mistake in the filter tank.

If these conditions are satisfied, the change/oil storage cycle will start and the display will show the message: "ch-oil"; if the conditions are not present, the system will send the respective error signals, for example the message "E-xx", accompanied by an acoustic warning, or will wait for the temperature to drop below the maximum permitted value (60°C).

When the oil reaches the correct temperature it drops down into the long-term storage tank 25 where it can be protected against external agents or disposed of according to legal regulations.

There is also a procedure for the cleaning of the fryer cooking tank 27; this procedure which is very similar to the one described above allows the cleaning with the help of detergent products of the cooking tank 27 and the discharge pipes 31 fitted with valves.

The "tank cleaning" procedure includes the use of the special container 25 so as to prevent contamination of the oil with chemical products.

Before activating the tank cleaning cycle, the "cleaning tank" 25 must be inserted in the "guided" housing 22, bearing in mind that for this tank it is not necessary to use the locking/release rod but just to push the tank firmly into place.

To start the cleaning cycle, the "oil" button must be pressed and held down for at least 5 seconds; the machine will in fact recognise the presence or not of the correct container, and the display will show the message "cln".

After the various routine checks (check of the oil temperature which must be below 60°C, check for the presence of the cleaning tank, and if any oil has been deposited by mistake in the filter tank) the system will open the discharge valve 31 which will remain open.

The cooking tank can now be cleaned and rinsed, taking care not to exceed the maximum capacity of the previously inserted cleaning container.

A mixture of water and detergent enters the tank 27, washes it and then passes through the discharge pipe 31 and into the cleaning container 25.

When cleaning is complete, the "oil" button should be pressed again and the system will close the discharge valve and return the unit to the stand-by condition.

Some cycles, such as "ch-oil" and "cln" automatically recognise the presence of the container that has been inserted, and since they are activated by the same button require the user to pay attention for insertion of the correct container.

Advantageously, the cascade filter can contain micromesh of different gauges on various levels, starting from wider gauge mesh at the top layer, gradually reducing the mesh gauge down to the lower layers so that the filter holds back the larger particles at the top and the smaller particles at the bottom.

The basket holder prefilter 10 can also be fitted on the panels and/or on the bottom with micromesh filters or microfilters whose purpose is to provide a type of prefiltering and thereby lengthen the working life of the filter.

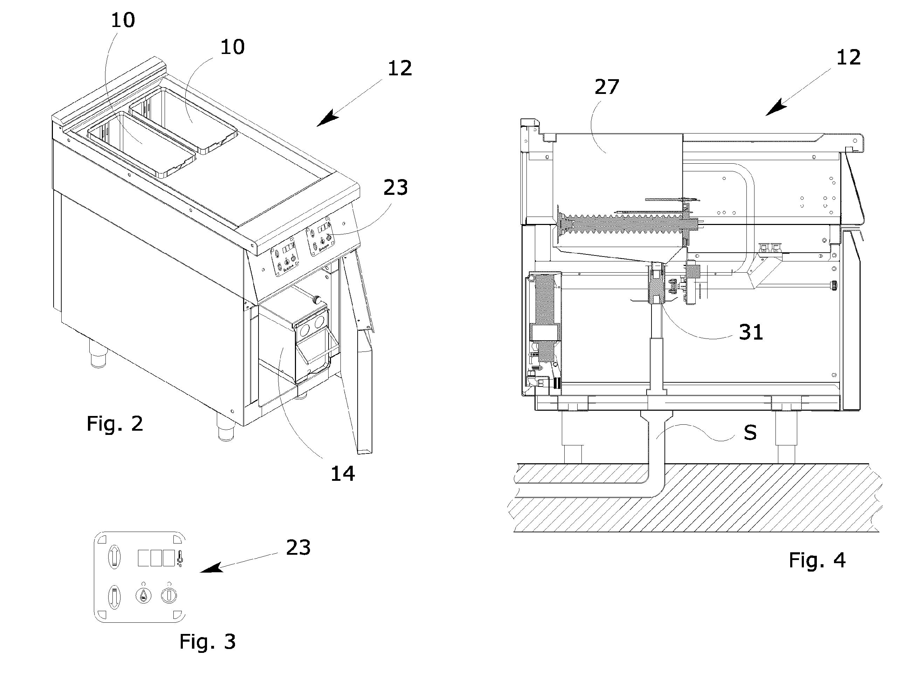

According to another embodiment shown in figure 4, the fryer can be installed close to a discharge pipe S and connected to this, to allow the discharge of the cleaning mix and of the tank and/or filter washing products.

The invention is described above with reference to a preferred embodiment. It is nevertheless clear that the invention is susceptible to numerous variations that lie within the scope of its disclosure, within the framework of technical equivalents.

## Claims

1. A fryer fitted with means for filtering and purifying frying oil, **characterised in that** the means substantially comprise two components (10, 11) which can be installed on a new fryer (12) or retrofitted to an existing fryer, and also **characterised in that** the first of the two filtering components comprises a basket holder prefilter (10) inserted inside the main cooking tank of the frying machine designed to receive the frying basket (13), while the second component comprises a filtering element (11) comprising a series of micromesh elements which enable gravity-fed filtering of the oil, and where all the filtering elements are contained inside a holding tank (14) closed by a cover (17), the fryer can be installed close to a discharge pipe (S) and connected to this in order to enable draining of the cleaning mix and the products for washing the tank and/or the filters.

2. The fryer fitted with means for filtering and purifying frying oil according the previous claim, **characterised in that** the first component comprises a basket holder prefilter (10) which enables the residues of the product cooked in the basket to adhere to and to be collected in an empty space which is easy to clean and wash, and substantially comprising a container open at the bottom so that it can be housed inside the frying tank straddling the central electrical resistance, and also **characterised in that** the lower open base of the basket holder prefilter (10) has tray-shaped panels (18), which could be made from micromesh, which are mobile being jointed on an arm linkage mechanism (19) so that they can rest on the bottom of the fryer straddling across the electrical resistance which thereby remains completely enclosed, and where the linkage arms (19) of the basket-holder prefilter (10) act as a mechanism which comprises at least one lever (20) which interacts mechanically with the central electrical resistance to join together or to move apart the tray-shaped panels (18) during positioning or removal of the basket holder prefilter (10).

3. The fryer fitted with means for filtering and purifying frying oil according to one of the foregoing claims, **characterised in that** the second filtering component comprises the lower filtering element (11) proper which is of the cascade type with various layers of micromesh and which comprises the following series of components: a holding tank (14), a tank-shaped filter (15) which contains a cascade filter (16), and a cover (17) which hermetically closes the holding tank (14), and where the cascade filter (16) comprises a series of filter elements (21) hinged to each other and made from micromesh.

4. The fryer fitted with means for filtering and purifying frying oil according to one of the foregoing claims, **characterised in that** it comprises a frying tank (27), a cleaned oil filler pipe (28), an oil recirculation pump (30), a pipe (31) with a valve for discharging the oil in the filter tank and an electrical resistance (32) for heating the frying oil.

5. The fryer fitted with means for filtering and purifying frying oil according to one of the foregoing claims, **characterised in that** the cover (17) has an opening (17') in which the pipe (31) fitted with the discharge valve connected to the frying tank is inserted.

6. The fryer fitted with means for filtering and purifying frying oil according to one of the foregoing claims, **characterised in that** the holding tank (14), complete with a handle (29) for removal and with all the filters, is inserted inside the fryer (12) and anchored to the fixed base (22) of the fryer cabinet (12) which in turn contains all the electrical, mechanical and hydraulic components including the control panel (23) on the front of the cabinet, while the inside of the cabinet houses the electronic components for controlling the operating logic.

7. The fryer fitted with means for filtering and purifying frying oil, **characterised in that** the fryer unit can have single or multiple compartments and in the case of multiple compartments can house two or more auxiliary tanks (10) and two or more filters (11), and also **characterised in that** the filtering tanks and the auxiliary tanks are of the quick-release type and are located on guides provided for this purpose in the base (22) so that they can be removed with the locking and release rod (24).

8. The device for filtering and purifying oil according to one of the foregoing claims, **characterised in that** the device has an auxiliary or washing tank (25), while the holding tank (14) is fitted with a drain tap (26).

9. The device for filtering and purifying oil according to one of the foregoing claims, **characterised in that** the cascade filter (11) can contain micromesh of different gauges on various layers starting with wider gauge mesh at the top layer gradually reducing the mesh gauge down to the lower layers so that filter holds back the large particles at the top and the smaller particles at the bottom, and also **characterised in that** the basket holder prefilter (10) can be fitted on the panels and/or on the bottom with micromesh filters or microfilters whose purpose is to provide a type of prefiltering and thereby lengthen the effective life of the filter.

10. A filtering method for frying machines according to the foregoing claims, **characterised in that** the method comprises the following steps:
a. The oil filtering cycle starts automatically at the end of cooking when the machine is switched off by pressing the button on the control panel (23); this is indicated by a message on the display.
b. Next, the intelligent management system checks that the filter tank is present, that the oil temperature is between 40° and 130°C and also checks if any oil has been deposited by mistake in the filter tank.
c. If these conditions are satisfied, the filtration cycle will start; if the conditions are not present the system will display a related warning message accompanied by an acoustic warning or will wait for the temperature to drop to below the maximum permitted value of 130°C.
d. When the oil reaches the correct temperature it drops down into the lower filter container (11) in a controlled manner at a controlled speed. The solid cooking residues can be removed by removing the filter and washing it in a dishwasher.
e. The oil flows down and enters the cover (17) through the opening (17'), enters the cascade filter (16) housed in the filter tank (15) which, with a microfiltering system forced by the recirculation pump (30) extracting from below, holds back all the impurities which if left in the frying tank would lead to degrading of the oil; the oil reaches the final step where the filtering tank (15) holds back the smallest particles. The oil is collected in the holding tank (14) which also decants any water present in the oil.
f. This cycle lasts several minutes and deposits water in the lower part of the tank (14) where there is a drain tap (26) for drawing off any water at regular intervals.
g. At the end of the steps described above, the oil which has now been purified of any harmful substances is returned to the frying tank (27); the system switches to "stand-by", the display switches off and the fryer is now ready for a new cooking cycle.
h. There is also a manually operated "ch-oil" oil change/oil storage cycle. This procedure is used to discharge spent oil or to store the oil in the long-term storage tank (25) when the fryer is not used for long periods such as holidays.
